# EUROPEAN PATENT APPLICATION

(11) **EP 4 821 659 A1**
(43) Date of publication of application: **14.10.2026**
(21) Application number: 24899415.4
(22) Date of filing: 19.09.2024
(51) Int. Cl.: B29C 64/20, B29C 64/245, B29C 64/295, B33Y 30/00

(54) **3D PRINTING PLATFORM AND 3D PRINTER**

(30) Priority: 06.12.2023 CN 202311666220
(71) Applicant: Shenzhen Tuozhu Technology Co., Ltd., Shenzhen, Guangdong 518000 (CN)
(72) Inventor: TIAN, Kaiwang, Shenzhen, Guangdong 518000 (CN); XIONG, Rongming, Shenzhen, Guangdong 518000 (CN)
(74) Representative: Grünecker Patent- und Rechtsanwälte PartG mbB
(86) International application number: PCT/CN2024/119683
(87) International publication number: WO 2025/118769

(57) **Abstract**

The invention provides a 3D build platform and a 3D printer. The 3D build platform comprises a heated bed, a heated bed support, two sets of leveling assemblies and a horizontal fixing member. The heated bed, configured to heat and carry a build plate or a printed object. The heated bed support, disposed on one side, facing away from a build surface, of the heated bed, wherein the build surface is one surface, carrying the build plate or the printed object, of the heated bed, and the heated bed is spaced apart from the heated bed support in a first direction, the first direction being perpendicular to the build surface. At least two sets of leveling assemblies, the heated bed support being configured to support the heated bed in the first direction through the at least two sets of leveling assemblies, wherein any one of the leveling assemblies is connected to a first position of the heated bed and the heated bed support, separately, and is configured to adjust a distance between the first position and the heated bed support in the first direction. A horizontal fixing member, configured to fixedly connect the heated bed and the heated bed support in a second direction, and configured to limit relative movement between the heated bed and the heated bed support in the second direction, the second direction being perpendicular to the first direction. The movement rigidity of the 3D build platform can be improved by additionally arranging the horizontal fixing member.

## Description

The present disclosure claims priority to Chinese Patent Application No. 202311666220.3, filed on December 06, 2023 and entitled "3D BUILD PLATFORM AND 3D PRINTER", the content of which is incorporated herein by reference.

### TECHNICAL FIELD

The present application belongs to the technical field of three-dimensional printing and particularly relates to a 3D build platform and a 3D printer.

### BACKGROUND

A 3D printer, also known as a three-dimensional printer or an additive manufacturing device, is a process equipment for rapid prototyping. The 3D printing technology that can be currently used in a 3D printer is fused deposition modeling (FDM). FDM is a technology based on digital models for constructing three-dimensional objects by using materials such as powdered metal or plastic through layer-by-layer printing. In a specific implementation, the three-dimensional printer adopting the FDM technology supplies hot melt filamentous materials (wire or filament) of an apparatus to a hot end by a feeding mechanism, and the hot melt filamentous materials are heated to a molten state in the hot end. The nozzle of the hot end can extrude the materials in a molten state to a build platform while moving along a printing path of the three-dimensional printer, and a three-dimensional object can be printed layer by layer.

During the operation of the 3D printer, the build platform and the hot end will generate relative displacement, which generally requires the build surface of the build platform to be substantially parallel to the plane where the hot end travels in the XY direction relative to the build platform. Currently, a screw-and-spring leveling mechanism is typically used to adjust the angle of the build surface of the heated bed.

### SUMMARY

A first aspect of the present application provides a 3D build platform. The 3D build platform includes: a heated bed, configured to heat and carry a build plate or a printed object;
a heated bed support, disposed on one side, facing away from a build surface, of the heated bed, where the build surface is one surface, carrying the build plate or the printed object, of the heated bed, and the heated bed is spaced apart from the heated bed support in a first direction, the first direction being perpendicular to the build surface;
at least two sets of leveling assemblies, the heated bed support being configured to support the heated bed in the first direction through the at least two sets of leveling assemblies, where any one of the leveling assemblies is connected to a first position of the heated bed and the heated bed support, separately, and is configured to adjust a distance between the first position and the heated bed support in the first direction; and
a horizontal fixing member, configured to fixedly connect the heated bed and the heated bed support in a second direction, and configured to limit relative movement between the heated bed and the heated bed support in the second direction, the second direction being perpendicular to the first direction.

According to the 3D build platform provided in the first aspect of the present application, at least two sets or at least three sets of leveling assemblies are used to connect the first position of the heated bed and the heated bed support in the first direction, separately, and the distance between the first position of the heated bed and the heated bed in the first direction is adjusted, thereby achieving leveling of the heated bed. However, the leveling assembly cannot achieve a rigid connection between the heated bed and the heated bed support, resulting in poor rigidity when the heated bed support drives the heated bed to move. Therefore, in the present application, a horizontal fixing member is additionally disposed. The horizontal fixing member is used to connect the heated bed and the heated bed support in the second direction perpendicular to the first direction, thereby fixedly connecting the heated bed and the heated bed support in the second direction. As a result, the relative movement between the heated bed and the heated bed support in the second direction is limited, shaking between the heated bed and the heated bed support in the second direction is prevented, and the rigidity between the heated bed and the heated bed support is improved, thereby improving the printing effect.

In a possible embodiment, the heated bed includes a body provided with the build surface and an extending part located on one side, facing away from the build surface, of the body; the horizontal fixing member comprises a first fixing member, and the first fixing member is configured to fixedly connect a second position on the extending part and the heated bed support to limit relative movement between the second position and the heated bed support; projections of the at least two sets of leveling assemblies and the second position on the build surface form vertices of a polygon. Since the positional relationship between the heated bed and the heated bed support at the first fixing member is fixed, the first fixing member can be used as a reference point for leveling the heated bed, so as to adjust at least two sets of leveling assemblies at other positions to complete leveling, thereby improving the accuracy of leveling the heated bed and improving the leveling efficiency.

One first fixing member is provided; the at least two sets of leveling assemblies consist of two sets of leveling assemblies, and projections of the two sets of leveling assemblies and the second position on the build surface form vertices of a triangle; or the at least two sets of leveling assemblies consist of three sets of leveling assemblies, and projections of the three sets of leveling assemblies and the second position on the build surface form vertices of a quadrilateral. The first fixing member and the leveling assemblies are each located at a vertex of the polygon, and thus are located at different positions.

In a possible embodiment, the build platform further includes: a vertical fixing member, the vertical fixing member being configured to fixedly connect a third position of the heated bed and the heated bed support to limit relative movement between the third position and the heated bed support, and projections of the at least two sets of leveling assemblies and the third position on the build surface form vertices of a polygon. Since the positional relationship between the heated bed and the heated bed support at the vertical fixing member is fixed, the vertical fixing member can be used as a reference point for leveling the heated bed, so as to adjust at least two sets of leveling assemblies at other positions to complete leveling, thereby improving the accuracy of leveling the heated bed and improving the leveling efficiency.

One vertical fixing member is provided; the at least two sets of leveling assemblies consist of two sets of leveling assemblies, and projections of the two sets of leveling assemblies and the third position on the build surface form vertices of a triangle; or the at least two sets of leveling assemblies consist of three sets of leveling assemblies, and projections of the three sets of leveling assemblies and the third position on the build surface form vertices of a quadrilateral. The vertical fixing member and the leveling assemblies are each located at a vertex of the polygon, and thus are located at different positions.

In a possible embodiment, the at least two sets of leveling assemblies are at least three sets of leveling assemblies, and projections of the at least three sets of leveling assemblies on the build surface form vertices of a polygon.

In a possible embodiment, the heated bed includes a body provided with the build surface and an extending part located on one side, facing away from the build surface, of the body, the horizontal fixing member includes a second fixing member, and the second fixing member is a fixing screw; the second fixing member penetrates through a through hole at a fourth position on the extending part and is connected to a screw hole on the heated bed support, an aperture of the through hole is greater than a diameter of the second fixing member, and a frictional force is present between the extending part and the heated bed support and/or between the extending part and the second fixing member; or, the second fixing member penetrates through a through hole on the heated bed support and is connected to a screw hole at the fourth position, an aperture of the through hole is greater than a diameter of the second fixing member, and a frictional force is present between the extending part and the heated bed support and/or between the heated bed support and the second fixing member; and an axial direction of the second fixing member is the second direction, and relative movement of the second fixing member within a range of the through hole is limited by the frictional force, so as to limit relative movement between the fourth position and the heated bed support in the first direction or the third direction, where the third direction is perpendicular to the first direction and the second direction, separately. Since the aperture of the through hole is greater than the diameter of the second fixing member, not only can the leveling of the heated bed at the position of the second fixing member be achieved (for example, performing leveling with a leveling force greater than the frictional force), but also the rigidity between the heated bed and the heated bed support in the first direction, the second direction, and the third direction can be increased; or, since the aperture of the through hole is greater than the diameter of the second fixing member, the leveling of the heated bed at the position of the second fixing member may be performed first, and after the leveling is completed, the second fixing member is used to fix the heated bed to the heated bed support in the first direction, the second direction, and the third direction.

The through hole is an elongated hole disposed in the first direction. Rigid fixation between the heated bed and the heated bed support in the second direction and the third direction can be achieved. Only the first direction relies on the frictional force for fixation, thereby providing a better fixation effect while allowing leveling of the heated bed.

The horizontal fixing member further comprises a third fixing member, and the third fixing member is a fixing screw; the third fixing member penetrates through a through hole at a fifth position on the extending part and is connected to a screw hole on the heated bed support, an aperture of the through hole is greater than a diameter of the third fixing member, and a frictional force is present between the extending part and the heated bed support and/or between the extending part and the third fixing member; or the third fixing member penetrates through a through hole on the heated bed support and is connected to a screw hole at the fifth position, an aperture of the through hole is greater than a diameter of the third fixing member, and a frictional force is present between the extending part and the heated bed support and/or between the heated bed support and the third fixing member; and an axial direction of the third fixing member is the third direction, and relative movement of the third fixing member within a range of the through hole is limited by the frictional force, so as to limit relative movement between the fifth position and the heated bed support in the first direction or the second direction. Since the aperture of the through hole is greater than the diameter of the third fixing member, not only can the leveling of the heated bed at the position of the third fixing member be achieved (for example, performing leveling with a leveling force greater than the frictional force), but also the rigidity between the heated bed and the heated bed support in the first direction, the second direction, and the third direction can be increased; or, since the aperture of the through hole is greater than the diameter of the third fixing member, the leveling of the heated bed at the position of the third fixing member may be performed first, and after the leveling is completed, the third fixing member is used to fix the heated bed to the heated bed support in the first direction, the second direction, and the third direction. Moreover, the cooperation of the third fixing member and the second fixing member can achieve rigid fixation between the heated bed and the heated bed support in the second direction and the third direction. Only the first direction relies on the frictional force for fixation, thereby providing a better fixation effect while allowing leveling of the heated bed.

The through hole is an elongated hole disposed in the first direction.

In a possible embodiment, a number of horizontal fixing members includes two fixing members, one of the fixing members is located on one side of the other fixing member in the second direction; or one fixing member is located on one side of the other fixing member in a third direction; or a connecting line between one fixing member and the other fixing member has a component in the second direction and a component in the third direction, where the third direction is perpendicular to the first direction and the second direction, separately.

The horizontal fixing member may consist of a first fixing member and a second fixing member, and the second fixing member is located on one side of the first fixing member in the second direction; or, the second fixing member is located on one side of the first fixing member in the third direction. An included angle between the connecting line and each of the second direction and the third direction is 45 degrees.

In a possible embodiment, the number of the horizontal fixing members includes at least three fixing members, and projections of the at least three fixing members on the build surface form vertices of a polygon. Three or four second fixing members may be included.

In a possible embodiment, the any one of the leveling assemblies includes a leveling member and a leveling elastic member, the leveling member penetrates through the heated bed from the build surface and is connected to the heated bed support, or the leveling member penetrates through the heated bed support and is connected to the heated bed, and two opposite ends of the leveling elastic member abut against the heated bed support and the heated bed, respectively.

In a possible embodiment, the heated bed support is connected to a pulley, and a sliding direction corresponding to the pulley is a second direction or a third direction, where the third direction is perpendicular to the first direction and the second direction, separately.

In a possible embodiment, the heated bed support is connected to a pulley, a sliding direction corresponding to the pulley is a fourth direction, and the fourth direction has a component in the second direction and a component in the third direction. Specifically, an included angle between the fourth direction and each of the second direction and the third direction is 45 degrees.

A second aspect of the present application provides a 3D printer. The 3D printer includes: a three-dimensional printing head, a base, a driving apparatus, and the 3D build platform according to the first aspect of the present application. The three-dimensional printing head is disposed above the 3D build platform, and the three-dimensional printing head is configured to extrude materials to print a model; the heated bed support is slidably connected to the base, and the driving apparatus is configured to drive the heated bed support to generate a relative displacement between the heated bed support and the base.

According to the 3D printer provided in the second aspect of the present application, by using the 3D build platform provided in the first aspect of the present application, the rigidity of the 3D printer can be improved, the accuracy of leveling can be improved, and the leveling efficiency can be improved.

### BRIEF DESCRIPTION OF THE DRAWINGS

To more clearly illustrate the technical solutions in the embodiments of the present disclosure or in the prior art, the accompanying drawings required for illustrating the embodiments or the prior art are briefly described below. It is apparent that the accompanying drawings in the following description are merely some embodiments of the present disclosure. Those of ordinary skill in the art may still derive other drawings from these accompanying drawings without creative efforts.
FIG. 1 is a three-dimensional schematic structural diagram of a 3D build platform according to an embodiment of the present application.
FIG. 2 is a three-dimensional schematic structural diagram of the 3D build platform shown in FIG. 1 from another angle of view.
FIG. 3 is a three-dimensional schematic structural diagram of a heated bed in the 3D build platform shown in FIG. 2 with the housing removed.
FIG. 4 is an exploded view of the 3D build platform shown in FIG. 3.
FIG. 5 is an exploded view of the 3D build platform shown in FIG. 4 from another angle of view.
FIG. 6 is a schematic cross-sectional diagram of the 3D build platform shown in FIG. 3.
FIG. 7 is a partial schematic diagram of the 3D build platform shown in FIG. 6.
FIG. 8 is an exploded view of a 3D build platform according to another embodiment of the present application.
FIG. 9 is a schematic cross-sectional diagram of a 3D build platform according to another embodiment of the present application.
FIG. 10 is a schematic cross-sectional diagram of a 3D build platform according to yet another embodiment of the present application.
FIG. 11 is a schematic cross-sectional diagram of a 3D build platform according to still another embodiment of the present application.
FIG. 12 is a schematic diagram of a 3D printer according to an embodiment of the present application.

Description of reference numerals:
3D build platform-1, 3D printer-2, heated bed-10, build surface-100, first position-101, second position-102, body-11, extending part-12, through hole-120, housing-13, heated bed support-20, pulley-21, leveling assembly-30, first leveling assembly-301, second leveling assembly-302, leveling member-31, leveling elastic member-32, horizontal fixing member-40, first fixing member-41, head part-411, rod part-412, elastic member-413, second fixing member-42, first fixing screw-421, second fixing screw-422, third fixing member-43, vertical fixing member-50, three-dimensional printing head-60, base-61, sliding rail-610.

### DETAILED DESCRIPTION

Implementations of the technical solutions of the present application are further described in detail below with reference to the accompanying drawings.

In the present application, unless otherwise explicitly stated and defined, the terms "fixed", "disposed", "mounted", and "connected" may indicate that one element is directly on another element or there may also be an intermediate element. "Fixed" may be understood as "a fixed connection", and "disposed", "mounted", and "connected" may all be understood as a connection. Meanwhile, the connection may include a mechanical connection or a structural connection, and may also be understood as an electrical connection, a thermal connection, or a communication connection. For the mechanical connection or the structural connection, the connection includes a detachable connection and a non-detachable connection. For example, the fixed connection may include a detachable fixed connection, a non-detachable fixed connection, or an integral formation, the rotatable connection may include a detachable rotatable connection and a non-detachable rotatable connection, and the slidable connection may include a detachable slidable connection and a non-detachable slidable connection. Likewise, the connection may also be a direct connection or an indirect connection via a component. For example, in the case of a detachable fixed connection, it means that in the mounted state, the positional relationship between at least two connected objects can be fixed; similarly, there are rotational connections, sliding connections, etc.

The terms "parallel", "perpendicular", and "codirectional" are defined for the current state of the art, rather than being absolutely rigid definitions in a mathematical sense, allowing for a small amount of deviation. For example, A being parallel to B means that A and B are parallel or approximately parallel, and the included angle between A and B may be between 0° and 10°. For another example, A being perpendicular to B means that A and B are perpendicular or approximately perpendicular, and the included angle between A and B may be between 80° and 100°. For another example, A and B being codirectional means that A and B are parallel or approximately parallel, and the included angle between A and B may be between 0° and 10°.

The terms "rigid", "rigid connection", and "rigidly fixed" do not mean absolute invariance in a physical sense. In the present application, "rigid", "rigid connection", and "rigidly fixed" allow for a small amount of deformation.

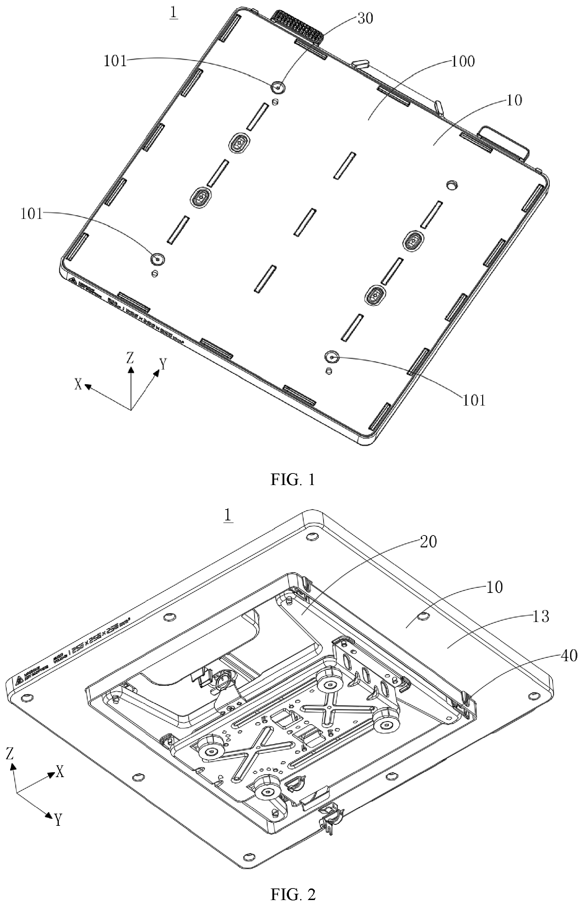

Referring to FIGs. 1 to 6, FIG. 1 is a three-dimensional schematic structural diagram of a 3D build platform according to an embodiment of the present application. FIG. 2 is a three-dimensional schematic structural diagram of the 3D build platform shown in FIG. 1 from another angle of view.

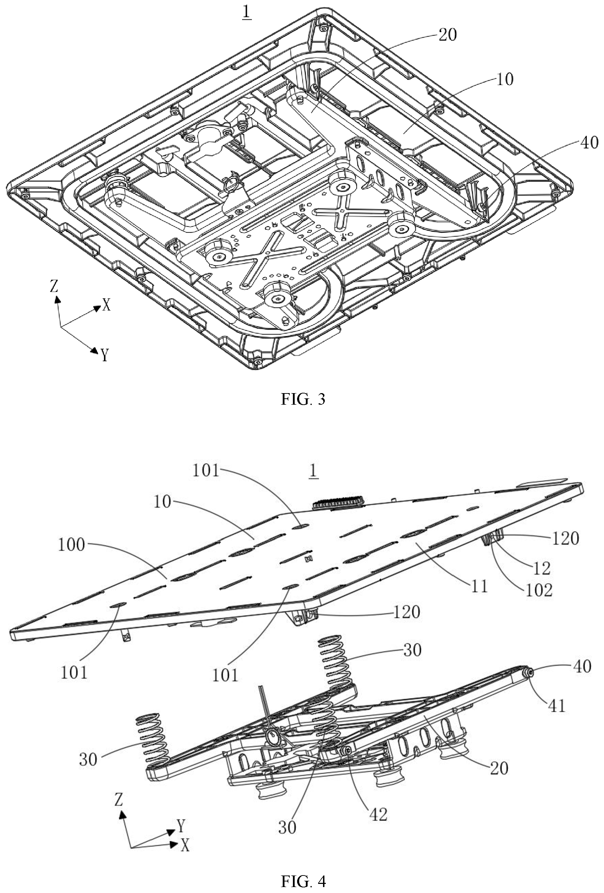

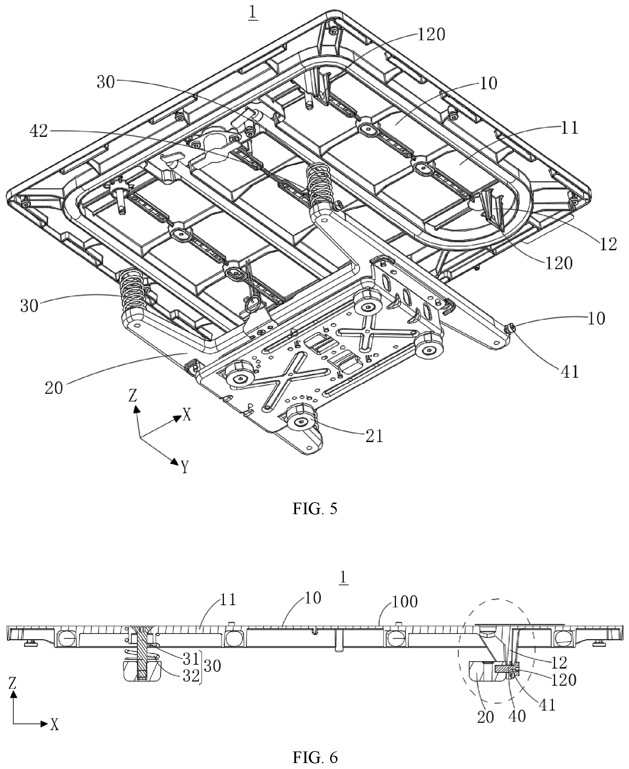

FIG. 3 is a three-dimensional schematic structural diagram of a heated bed in the 3D build platform shown in FIG. 2 with the housing removed. FIG. 4 is an exploded view of the 3D build platform shown in FIG. 3. FIG. 5 is an exploded view of the 3D build platform shown in FIG. 4 from another angle of view. FIG. 6 is a schematic cross-sectional diagram of the 3D build platform shown in FIG. 3.

The 3D build platform 1 provided in the embodiment includes a heated bed 10, a heated bed support 20, a leveling assembly 30, and a horizontal fixing member 40. The heated bed 10 is configured to heat and carry a build plate or a printed object. The heated bed support 20 is disposed on one side, facing away from a build surface 100, of the heated bed 10. The build surface 100 is one surface, carrying the build plate or the printed object, of the heated bed 10, and the heated bed 10 is spaced apart from the heated bed support 20 in a first direction, the first direction being perpendicular to the build surface 100. The first direction may also be referred to as a Z-axis direction. The heated bed support 20 is configured to support the heated bed 10 in the first direction through the at least two sets of leveling assemblies 30, where any one of the leveling assemblies 30 is connected to a first position 101 of the heated bed 10 and the heated bed support 20, separately, and is configured to adjust the distance between the first position 101 and the heated bed support 20 in the first direction. A horizontal fixing member 40 is configured to fixedly connect the heated bed 10 and the heated bed support 20 in a second direction, and configured to limit the relative movement between the heated bed 10 and the heated bed support 20 in the second direction, the second direction being perpendicular to the first direction. The second direction may be an X-axis direction, a Y-axis direction, or another direction perpendicular to the Z-axis direction.

Not all leveling assemblies 30 share one first position 101, but each leveling assembly 30 has its own first position 101.

The horizontal fixing member 40 may be detachable; that is, based on actual requirements, the horizontal fixing member 40 may be used for fixing after the leveling is completed, or the horizontal fixing member 40 may be used for fixing before the leveling, so as to facilitate the stability in the leveling process.

The 3D build platform 1 in the embodiment mainly includes a heated bed 10, a heated bed support 20, at least two sets of leveling assemblies 30, and a horizontal fixing member 40. The heated bed 10 is mainly configured to carry a build plate or a printed object, providing a carrying basis for the build plate or the printed object. The build plate is configured to carry the printed object. Therefore, the surface, configured to carry the build plate or the printed object, of the heated bed 10 is referred to as the build surface 100. In other words, as shown in FIGs. 1 and 4, the upper surface of the heated bed 10 is the build surface 100. Moreover, the heated bed 10 may also be configured to heat the build plate or the printed object. The purpose of heating the build plate is to heat the printed object on the print panel, thereby improving the print quality.

The heated bed support 20 is a support for the heated bed 10 and is mainly configured to support and mount the heated bed 10. The heated bed support 20 may be disposed on one side, facing away from the build surface 100, of the heated bed 10. In other words, as shown in FIG. 4, the heated bed support 20 is disposed on the lower surface of the heated bed 10. The slidable connection between the heated bed support 20 and the Y-axis profile enables the heated bed support 20 to slide, thereby driving the heated bed 10 disposed on the heated bed support 20 to slide, thus achieving the relative displacement between the three-dimensional printing head and the heated bed in the Y-axis direction.

Optionally, the heated bed support 20 is connected to a pulley 21. Specifically, one side, facing away from the heated bed 10, of the heated bed support 20 is provided with the pulley 21, and the Y-axis profile of the base 61 is provided with a sliding rail 610. The relative sliding of the heated bed support 20 relative to the Y-axis profile in the Y-axis direction can be achieved by using the pulley 21 and the sliding rail 610, where the Y-axis direction may be the second direction or the third direction. Moreover, the heated bed support 20 and the heated bed 10 are spaced apart in a direction perpendicular to the build surface 100. In the embodiment and hereinafter, the direction perpendicular to the build surface 100 is referred to as the first direction. In other words, the heated bed support 20 and the heated bed 10 are not in contact in the first direction but have a certain distance therebetween, which is convenient for the leveling assembly 30 to adjust the distance between the heated bed support 20 and the heated bed 10 in the first direction, thereby achieving leveling. In addition, if the build surface 100 of the heated bed 10 is considered as a surface composed of the X direction and the Y direction, the first direction is the Z direction.

The leveling assembly 30 is mainly configured to achieve support and leveling. Specifically, the leveling assembly 30 connects the first position 101 of the heated bed 10 and the heated bed support 20 in the first direction, such that the heated bed 10 and the heated bed support 20 are spaced apart in the first direction. It may also be understood that the first position 101 of the heated bed 10 is spaced apart from the heated bed support 20 in the first direction. The aforementioned first position 101 may be understood as the position where the leveling assembly 30 connects the heated bed 10. Since the leveling assembly 30 connects the heated bed 10 to the heated bed support 20, the heated bed support 20 can support the heated bed 10 in the first direction through the leveling assembly 30. Moreover, the leveling assembly 30 can also adjust the distance between the first position 101 of the heated bed 10 and the heated bed support 20 in the first direction, thereby changing the angle of the build surface 100 of the heated bed 10 and achieving the leveling function. As for the leveling assembly 30, how to achieve leveling will be described in detail below in the present application.

The horizontal fixing member 40 is configured to connect the heated bed 10 to the heated bed support 20 in another direction. For example, the horizontal fixing member 40 fixedly connects the heated bed 10 and the heated bed support 20 in the second direction. In this case, at the position of the horizontal fixing member 40, there may be no gap between the heated bed 10 and the heated bed support 20 in the second direction; that is, at the position of the horizontal fixing member 40, the heated bed 10 abuts against the heated bed support 20. The position of the horizontal fixing member 40 is the position where the horizontal fixing member 40 connects the heated bed 10. The second direction and the first direction are perpendicular to each other. If the first direction is the Z-axis direction, the second direction is the X-axis direction, the Y-axis direction, or another direction perpendicular to the Z-axis direction. For example, the included angle between the second direction and each of the X-axis direction and the Y-axis direction is 45 degrees. In this way, the horizontal fixing member 40 can be used to limit the relative movement between the heated bed 10 and the heated bed support 20 in the second direction.

In summary, with the above configuration, in the embodiment, the horizontal fixing member 40 can be used to limit the heated bed 10 and the heated bed support 20, thereby preventing shaking between the heated bed 10 and the heated bed support 20 and increasing the rigidity between the heated bed 10 and the heated bed support 20. In addition, the horizontal fixing member 40 can also be used as a reference point for leveling the heated bed 10, thereby improving the accuracy of leveling the heated bed 10 and improving the leveling efficiency.

It should be noted that in the embodiment, at least two sets of leveling assemblies 30 are provided, and each set of the leveling assembly 30 is connected to the first position 101 of the heated bed 10 and the heated bed support 20, separately. Each set of the leveling assembly 30 is configured to adjust the distance between the first position 101 of the heated bed 10 and the heated bed support 20 in the first direction. In this way, the projections of the at least two sets of leveling assemblies 30 and one fixing member (including but not limited to the horizontal fixing member 40 or the vertical fixing member 50) on the build surface 100 can form at least three coplanar points.

Referring to FIGs. 4 to 6 again, in the embodiment, the heated bed 10 includes a body 11 provided with the build surface 100 and an extending part 12 located on one side, facing away from the build surface 100, of the body 11. The horizontal fixing member 40 includes a first fixing member 41, and the first fixing member 41 is configured to fixedly connect a second position 102 on the extending part 12 and the heated bed support 20 to limit the relative movement between the second position 102 and the heated bed support 20. The projections of the at least two sets of leveling assemblies 30 and the second position 102 on the build surface 100 form vertices of a polygon. The first fixing member 41 fixes the relative position between the second position 102 and the heated bed support 20, but does not limit the rotation of the heated bed 10 relative to the heated bed support 20 around the first fixing member 41. Therefore, the first fixing member 41 can also be used as a reference point for leveling the heated bed 10, thereby improving the accuracy of leveling the heated bed 10 and improving the leveling efficiency. For example, at the position of the first fixing member 41, during the leveling by the leveling assembly 30, the heated bed 10 can rotate around the first fixing member 41, thereby changing the angle of the build surface 100 of the heated bed 10 and achieving the purpose of leveling. Optionally, the second position 102 is different from the first position 101.

Not all first fixing members 41 share one second position 102, but each first fixing member 41 has its own second position 102.

The heated bed 10 includes a body 11 and an extending part 12. The body 11 is a part that heats and carries the build plate or the printed object, so the build surface 100 is the upper surface of the body 11. The extending part 12 is located on one side, facing away from the build surface 100, of the body 11; that is, the extending part 12 is disposed on the lower surface of the body 11. The extending part 12 may be disposed corresponding to the side wall of the heated bed support 20, providing a basis for the horizontal fixing member 40 to connect the extending part 12 and the heated bed support 20. In this case, the extending part 12 may also be referred to as a rib for fixing the horizontal fixing member 40.

The horizontal fixing member 40 includes a first fixing member 41, where the first fixing member 41 is the aforementioned component that fixedly connects the heated bed 10 and the heated bed support 20 in the second direction. Specifically, the first fixing member 41 fixedly connects the extending part 12 and the side wall of the heated bed support 20 in the second direction. In this case, the position where the first fixing member 41 connects the extending part 12 is the aforementioned second position 102. By using the extending part 12 and the first fixing member 41, the relative movement between the second position 102 and the heated bed support 20 can be limited, thereby improving the rigidity of the 3D build platform 1. Moreover, the projections of the at least two sets of leveling assemblies 30 and the second position 102 on the build surface 100 form vertices of a polygon, such that at least three points can be arranged coplanar, thereby ensuring the support and connection performance of the 3D build platform 1. In addition, the first fixing member 41 can be used as a leveling reference point for the 3D build platform, allowing the heated bed 10 to rotate around the first fixing member 41 relative to the heated bed support 20, thereby reducing the difficulty of leveling.

In a possible implementation, one first fixing member 41 is provided; the at least two sets of leveling assemblies consist of two sets of leveling assemblies, and the projections of the two sets of leveling assemblies and the second position 102 on the build surface form vertices of a triangle; or the at least two sets of leveling assemblies consist of three sets of leveling assemblies, and the projections of the three sets of leveling assemblies and the second position 102 on the build surface form vertices of a quadrilateral.

Optionally, as shown in FIG. 2, the heated bed 10 may further include a housing 13. The housing 13 is detachably disposed on one side, facing away from the build surface 100, of the body 11 and surrounds the periphery of the extending part 12. At least part of the heated bed support 20 is disposed within the housing 13, and the housing 13 can be used to effectively protect the heated bed support 20 and components on the heated bed 10.

Referring to FIGs. 4 to 6 again, in the embodiment, the first fixing member 41 is a fixing screw, and the first fixing member 41 penetrates through a through hole 120 at the second position 102 and is connected to a screw hole on the heated bed support 20; or the first fixing member 41 penetrates through a through hole 120 on the heated bed support 20 and is connected to a screw hole at the second position 102. The diameter of the first fixing member 41 is consistent with the aperture of the through hole 120. In this way, the first fixing member 41 fixes the relative position between the second position 102 and the heated bed support 20, but does not limit the rotation of the heated bed 10 relative to the heated bed support 20 around the first fixing member 41.

In the embodiment, the first fixing member 41 may be a fixing screw or a transverse screw. To achieve the fixed connection between the extending part 12 and the heated bed support 20, in one embodiment, a through hole 120 may be formed at the second position 102 of the extending part 12; that is, the through hole 120 is added at a position corresponding to the first fixing member 41 to lock the screw. Meanwhile, a screw hole is formed on the heated bed support 20, such that the first fixing member 41 penetrates through the through hole 120 at the second position 102 and is connected to the screw hole on the heated bed support 20. In other embodiments, a through hole 120 may be formed on the heated bed support 20, and a screw hole is formed at the second position 102 of the extending part 12, such that the first fixing member 41 penetrates through the through hole 120 on the heated bed support 20 and is connected to the screw hole at the second position 102. In the embodiment, only the case is schematically illustrated where the first fixing member 41 penetrates through the through hole 120 at the second position 102 and is connected to the screw hole on the heated bed support 20. Moreover, in the embodiment, the diameter of the first fixing member 41 is consistent with the aperture of the through hole 120, such that the first fixing member 41 can not only limit the mutual movement between the heated bed 10 and the heated bed support 20 in the second direction, but also limit the mutual movement between the heated bed 10 and the heated bed support 20 in the first direction and the third direction, thereby improving the rigidity, support, and connection performance of the 3D build platform 1. The first fixing member 41 may be screwed in with a small locking force before leveling, then the leveling process is performed, and after the leveling is completed, the first fixing member 41 is completely locked. In this way, the first fixing member 41 can be used to increase the rigidity, and the first fixing member 41 can also be used to assist in leveling.

It should be noted that when the first fixing member 41 fixedly connects the extending part 12 to the heated bed support 20, a frictional force is present between the extending part 12 and the heated bed support 20 and/or between the extending part 12 and the first fixing member 41. Alternatively, a frictional force is present between the extending part 12 and the heated bed support 20 and/or between the heated bed support 20 and the first fixing member 41. In the embodiment, the rotation of the heated bed 10 relative to the heated bed support 20 around the axial direction of the first fixing member 41 can be limited by the frictional force. Therefore, the fixed connection of the first fixing member 41 can prevent the heated bed 10 from rotating freely relative to the heated bed support 20. Moreover, leveling can be achieved only when the rotational force generated during leveling is greater than the frictional force.

Referring to FIG. 4, in the embodiment, the at least two sets of leveling assemblies 30 may be at least three sets of leveling assemblies 30, and the projections of the at least three sets of leveling assemblies 30 on the build surface 100 form vertices of a polygon. In the embodiment, at least three sets of leveling assemblies 30 are provided, and the projections of the at least three sets of leveling assemblies 30 on the build surface 100 of the heated bed 10 form the vertices of the polygon. That is, the at least three sets of leveling assemblies 30 can form three coplanar points, thereby achieving the connection performance and supporting effect between the heated bed 10 and the heated bed support 20 by only using the leveling assemblies 30.

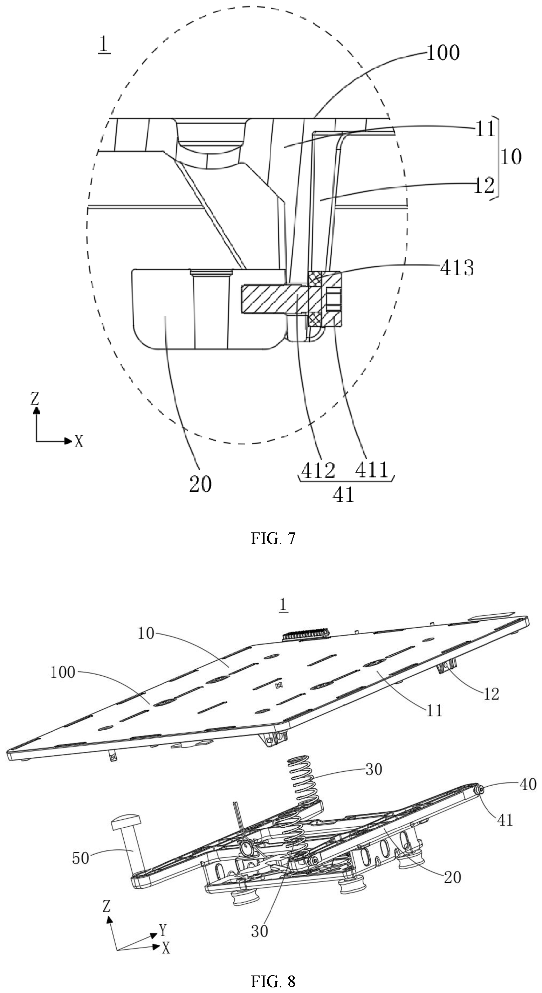

Referring to FIG. 7, FIG. 7 is a partial schematic diagram of the 3D build platform shown in FIG. 6. In the embodiment, the 3D build platform 1 may further include an elastic member 413, and the first fixing member 41 includes a head part 411 and a rod part 412 connected to each other. The rod part 412 is connected to the second position 102 of the extending part 12 and the heated bed support 20, and the head part 411 is located on one side, facing away from the heated bed support 20, of the extending part 12. The elastic member 413 can abut between the second position 102 of the extending part 12 and the head part 411 in a compressed state.

When the first fixing member 41 is a fixing screw, the fixing screw generally includes a threaded head and a threaded rod, where the threaded head is the head part 411, and the threaded rod is the rod part 412. In the embodiment, the rod part 412 can penetrate through the second position 102 of the extending part 12 and be connected to the heated bed support 20. In this case, an elastic member 413 can be additionally disposed, and the elastic member 413 abuts between the second position 102 of the extending part 12 and the head part 411 in a compressed state, such that the locking force of the first fixing member 41 can be controlled. As a result, there is no gap between the second position 102 of the extending part 12 and the heated bed support 20, while preventing complete locking to allow rotation around the fixing member. Specifically, when the first fixing member 41 is locked to the bottom, the elastic member 413 is compressed but not completely flattened, causing the elastic member 413 to generate a certain pressing force. This achieves the function that there is no gap between the two extending parts 12 and the heated bed support 20, while preventing complete locking to allow rotation around the first fixing member 41, thereby adjusting the degree of freedom of the heated bed 10 in the left-right direction. Optionally, the elastic member 413 includes, but is not limited to, an elastic sheet or a spring. Optionally, such an elastic member 413 may also be provided for other horizontal fixing members 40 described below.

Referring to FIG. 8, FIG. 8 is an exploded view of a 3D build platform according to another embodiment of the present application. In the embodiment, the build platform further includes a vertical fixing member 50. The vertical fixing member 50 is configured to fixedly connect a third position of the heated bed 10 and the heated bed support 20 to limit the relative movement between the third position and the heated bed support 20. The projections of the at least two sets of leveling assemblies 30 and the third position on the build surface 100 form vertices of a polygon.

In another embodiment, a vertical fixing member 50 may be additionally disposed on the basis of the horizontal fixing member 40. The vertical fixing member 50 can fixedly connect the third position of the heated bed 10 and the heated bed support 20 in the first direction. In this case, the position where the vertical fixing member 50 connects the heated bed 10 is the aforementioned third position. Thus, the relative movement between the third position of the heated bed 10 and the heated bed support 20 in the first direction can also be limited, and the relative movement between the third position of the heated bed 10 and the heated bed support 20 in the second direction and the third direction can also be further limited, thereby improving the rigidity of the 3D build platform 1 and achieving an effect similar to that of the first fixing member 41. Therefore, in the embodiment, the vertical fixing member 50 may be used to replace the first fixing member 41. Moreover, the projections of the at least two sets of leveling assemblies 30 and the third position on the build surface 100 form vertices of a polygon, such that at least three points can be arranged coplanar, thereby improving the support and connection performance of the 3D build platform 1.

Not all vertical fixing members 50 share one third position, but each vertical fixing member 50 has its own third position.

In the embodiment, the vertical fixing member 50 is a fixing screw, and the vertical fixing member 50 penetrates through a through hole 120 at the third position and is connected to a screw hole on the heated bed support 20; or the vertical fixing member 50 penetrates through a through hole 120 on the heated bed support 20 and is connected to a screw hole at the third position. The diameter of the vertical fixing member 50 is consistent with the aperture of the through hole 120. In this way, the vertical fixing member 50 fixes the relative position between the third position and the heated bed support 20.

The vertical fixing member 50 may be a fixing screw. To achieve the fixed connection between the heated bed 10 and the heated bed support 20, in one embodiment, a through hole 120 may be formed at the third position of the heated bed 10, and a screw hole may be formed on the heated bed support 20, such that the vertical fixing member 50 penetrates through the through hole 120 at the third position and is connected to the screw hole on the heated bed support 20. In other embodiments, a through hole 120 may also be formed on the heated bed support 20, and a screw hole is formed at the third position of the heated bed 10, such that the vertical fixing member 50 penetrates through the through hole 120 on the heated bed support 20 and is connected to the screw hole at the third position. In the embodiment, only the case is schematically illustrated where the vertical fixing member 50 penetrates through the through hole 120 at the third position and is connected to the screw hole on the heated bed support 20.

Moreover, in the embodiment, the diameter of the vertical fixing member 50 is consistent with the aperture of the through hole 120, such that the vertical fixing member 50 can not only limit the mutual movement between the heated bed 10 and the heated bed support 20 in the first direction, but also limit the mutual movement between the heated bed 10 and the heated bed support 20 in the second direction and the third direction perpendicular to the first direction, thereby improving the rigidity, support, and connection performance of the 3D build platform 1.

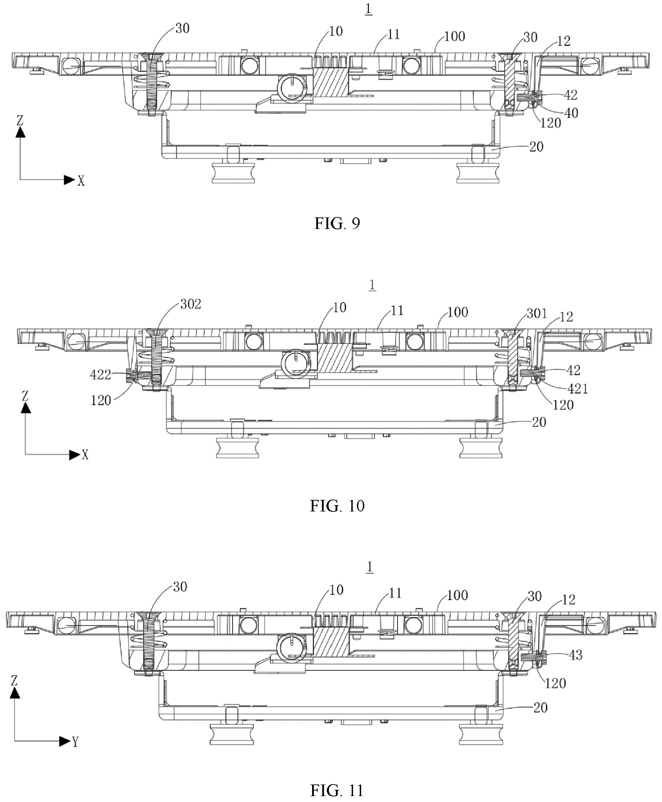

Referring to FIGs. 4 to 5, and 9 together, FIG. 9 is a schematic cross-sectional diagram of a 3D build platform according to another embodiment of the present application. In the embodiment, the heated bed 10 includes a body 11 provided with the build surface 100 and an extending part 12 located on one side, facing away from the build surface 100, of the body 11. The horizontal fixing member 40 includes a second fixing member 42, and the second fixing member 42 is a fixing screw. The second fixing member 42 penetrates through a through hole 120 at the fourth position on the extending part 12 and is connected to a screw hole on the heated bed support 20, the aperture of the through hole 120 is greater than the diameter of the second fixing member 42, and a frictional force is present between the extending part 12 and the heated bed support 20 and/or between the extending part 12 and the second fixing member 42. Alternatively, the second fixing member 42 penetrates through a through hole 120 on the heated bed support 20 and is connected to a screw hole at the fourth position, the aperture of the through hole 120 is greater than the diameter of the second fixing member 42, and a frictional force is present between the extending part 12 and the heated bed support 20 and/or between the heated bed support 20 and the second fixing member 42. The axial direction of the second fixing member 42 is the second direction, and the relative movement of the second fixing member 42 within the range of the through hole 120 is limited by the frictional force, so as to limit the relative movement between the fourth position and the heated bed support 20 in the first direction or the third direction, where the third direction is perpendicular to the first direction and the second direction, separately.

Not all second fixing members 42 share one fourth position, but each second fixing member 42 has its own fourth position.

The horizontal fixing member 40 may include a second fixing member 42, and the second fixing member 42 is also a fixing screw. In the embodiment, the second fixing member 42 can connect the fourth position of the extending part 12 and the heated bed support 20. Specifically, in one embodiment, a through hole 120 may be formed at the fourth position of the extending part 12, and a screw hole may be formed on the heated bed support 20, such that the second fixing member 42 penetrates through the through hole 120 at the fourth position and is connected to the screw hole on the heated bed support 20. In other embodiments, a through hole 120 may also be formed on the heated bed support 20, and a screw hole is formed at the fourth position of the extending part 12, such that the second fixing member 42 penetrates through the through hole 120 on the heated bed support 20 and is connected to the screw hole at the fourth position. In the embodiment, only the case is schematically illustrated where the second fixing member 42 penetrates through the through hole 120 at the fourth position and is connected to the screw hole on the heated bed support 20.

Moreover, the axial direction of the second fixing member 42 is also the second direction; that is, the axial direction of the second fixing member 42 is the same as the axial direction of the first fixing member 41, both being the second direction. In the embodiment, the aperture of the through hole 120 may be greater than the diameter of the second fixing member 42. In this way, even if the first fixing member 41 and the second fixing member 42 are present at the same time, the heated bed 10 can still rotate around the first fixing member 41. In this case, the second fixing member 42 rotates around the first fixing member 41 within the through hole 120 with a relatively large aperture, thereby achieving leveling.

In addition, when the second fixing member 42 fixedly connects the extending part 12 to the heated bed support 20, a frictional force is present between the extending part 12 and the heated bed support 20 and/or between the extending part 12 and the second fixing member 42, or a frictional force is present between the extending part 12 and the heated bed support 20 and/or between the heated bed support 20 and the second fixing member 42. In the embodiment, the relative movement of the second fixing member 42 within the range of the through hole 120 can be limited by the above frictional force, so as to limit the relative movement between the fourth position of the extending part 12 and the heated bed support 20 in the first direction or the third direction, thereby further improving the movement rigidity of the 3D build platform 1 and the connection stability. Moreover, leveling can be achieved only when the acting force generated during leveling and exerted on the heated bed 10 or the heated bed support 20 in the first direction is greater than the frictional force. In other possible embodiments, the leveling of the heated bed 10 at the position of the second fixing member 42 may be performed first, and after the leveling is completed, the second fixing member 42 is used to fix the heated bed 10 to the heated bed support 20 in the first direction, the second direction, and the third direction. Alternatively, the second fixing member 42 may be screwed in with a small locking force before leveling, then the leveling process is performed, and after the leveling is completed, the second fixing member 42 is completely locked. In this way, the second fixing member 42 can be used to increase the rigidity and achieve leveling.

In the embodiment, the spatial relationship between the first position 101 and the fourth position is fixed. For example, it may be specified that for any fourth position, the distance between the any fourth position and the corresponding first position 101 is less than a preset distance. Therefore, when the any leveling assembly 30 adjusts the distance between the first position 101 and the heated bed support 20 in the first direction, the any leveling assembly 30 drives the corresponding second fixing member 42 to overcome the frictional force (if the second fixing member 42 is locked; if it is not locked, no overcoming is required) and move in the first direction within the range of the through hole 120.

In the embodiment, the spatial relationship between the first position 101 of the heated bed 10 and the fourth position can be fixed. In this way, when any leveling assembly 30 adjusts the distance between the first position 101 and the heated bed support 20 in the first direction, i.e., when the leveling assembly 30 adjusts the distance between the first position 101 of the heated bed 10 and the heated bed support 20 in the Z direction, any leveling assembly 30 can drive the corresponding second fixing member 42 to overcome the frictional force and move in the first direction within the range of the through hole 120. Consequently, the distance between the first position 101 and the heated bed support 20 can also be adjusted on the premise of providing the second fixing member 42, thereby adjusting the angle of the build surface 100 of the heated bed 10 and achieving the purpose of leveling. Referring to FIG. 10, FIG. 10 is a schematic cross-sectional diagram of a 3D build platform according to yet another embodiment of the present application. In the embodiment, the second fixing member 42 includes a first fixing screw 421 and a second fixing screw 422. The at least two sets of leveling assemblies 30 include a first leveling assembly 301 and a second leveling assembly 302. The first leveling assembly 301 drives the first fixing screw 421 to overcome the frictional force (if the first fixing screw 421 is locked; if it is not locked, no overcoming is required) and move within the range of the through hole 120 where the first fixing screw 421 is located. The second leveling assembly 302 drives the second fixing screw 422 to overcome the frictional force (if the second fixing screw 422 is locked; if it is not locked, no overcoming is required) and move within the range of the through hole 120 where the second fixing screw 422 is located.

In the embodiment, two sets of second fixing members 42 and two sets of leveling assemblies 30 are provided. The second fixing member 42 includes a first fixing screw 421 and a second fixing screw 422, and the leveling assembly 30 includes a first leveling assembly 301 and a second leveling assembly 302. The first leveling assembly 301 is matched with the first fixing screw 421 to form a set, and the second leveling assembly 302 is matched with the second fixing screw 422 to form a set. The first leveling assembly 301 can drive the first fixing screw 421 to overcome the frictional force and move within the range of the through hole 120 where the first fixing screw 421 is located, and the second leveling assembly 302 can drive the second fixing screw 422 to overcome the frictional force and move within the range of the through hole 120 where the second fixing screw 422 is located, so as to further adjust the distance between the first position 101 of the heated bed 10 and the heated bed support 20 in the Z direction, thereby adjusting the angle of the build surface 100 of the heated bed 10 and achieving the purpose of leveling.

Optionally, three leveling assemblies 30 are provided, and correspondingly, three second fixing members 42 are provided, or two second fixing members, or one second fixing member. In short, the number of the second fixing members 42 is less than or equal to the number of the leveling assemblies 30, and one first fixing member 41 is provided. Taking the case where three second fixing members 42 are provided as an example, each leveling assembly 30 and one second fixing member 42 form a set. As shown in FIGs. 4 to 5, the first fixing member 41, one set of leveling assembly 30, and one second fixing member 42 are disposed on one side of the heated bed support 20, and two sets of leveling assemblies 30 and two second fixing members 42 are correspondingly disposed on the other side of the heated bed support 20. In other words, one side surface of the heated bed 10 is provided with one first fixing member 41 and one second fixing member 42, separately, but there is no leveling assembly 30 at the position where the first fixing member 41 is located, and the leveling assembly 30 is disposed at the position where the second fixing member 42 is located. The other side of the heated bed 10 is provided with two second fixing members 42 corresponding to the first fixing members 41 and the second fixing member 42, and the leveling assembly 30 is disposed at the position where each second fixing member 42 is located.

In another possible embodiment, one side surface of the heated bed 10 is provided with one first fixing member 41 and one second fixing member 42, separately. The leveling assembly 30 is disposed at the position where the second fixing member 42 is located, but there is no leveling assembly at the position where the first fixing member 41 is located, and the other side of the heated bed 10 is not provided with the second fixing member 42, and is only provided with two sets of leveling assemblies 30.

According to the above content, it may also be understood that the heated bed support 20 includes one side and the other side disposed opposite to each other. One side includes a first end and a second end disposed opposite to each other. The first fixing member 41 is connected to the first end, and the second fixing member 42 and the leveling assembly 30 are connected to the second end. The other side includes a third end and a fourth end disposed opposite to each other. The third end is provided with the second fixing member 42 and the leveling assembly 30, and/or the fourth end is provided with the second fixing member 42 and the leveling assembly 30.

Based on the above configuration, during leveling, the leveling assembly 30 on the same side as the first fixing assembly may be adjusted first to allow the heated bed 10 to rotate around the first fixing member 41 until the leveling standard corresponding to the leveling assembly 30 is reached. Next, the leveling assembly 30 on the other side is adjusted, so as to adjust the heights of the two opposite sides of the heated bed 10 in the horizontal direction to be consistent until leveling is completed. Optionally, when two opposite sides of the heated bed support 20 are each provided with the horizontal fixing member 40, the axes of the two horizontal fixing members 40 disposed opposite to each other coincide, thereby avoiding interference during movement.

Referring to FIG. 11, FIG. 11 is a schematic cross-sectional diagram of a 3D build platform according to still another embodiment of the present application. In the embodiment, the horizontal fixing member 40 includes a third fixing member 43, and the third fixing member 43 is a fixing screw. The third fixing member 43 penetrates through a through hole 120 at the fifth position on the extending part 12 and is connected to a screw hole on the heated bed support 20, the aperture of the through hole 120 is greater than the diameter of the third fixing member 43, and a frictional force is present between the extending part 12 and the heated bed support 20 and/or between the extending part 12 and the third fixing member 43. Alternatively, the third fixing member 43 penetrates through a through hole 120 on the heated bed support 20 and is connected to a screw hole at the fifth position, the aperture of the through hole 120 is greater than the diameter of the third fixing member 43, and a frictional force is present between the extending part 12 and the heated bed support 20 and/or between the heated bed support 20 and the third fixing member 43.

The axial direction of the third fixing member 43 is the third direction, and the relative movement of the third fixing member 43 within the range of the through hole 120 is limited by the frictional force, so as to limit the relative movement between the fifth position and the heated bed support 20 in the first direction or the second direction.

Not all third fixing members 43 share one fifth position, but each third fixing member 43 has its own fifth position.

In addition to the first fixing member 41 and the second fixing member 42, the horizontal fixing member 40 may further include a third fixing member 43. The three fixing members may be arbitrarily combined or used independently, and the third fixing member 43 is also a fixing screw. In the embodiment, the third fixing member 43 can connect the fifth position of the extending part 12 and the heated bed support 20. Specifically, in one embodiment, a through hole 120 may be formed at the fifth position of the extending part 12, and a screw hole may be formed on the heated bed support 20, such that the third fixing member 43 penetrates through the through hole 120 at the fifth position and is connected to the screw hole on the heated bed support 20. In other embodiments, a through hole 120 may also be formed on the heated bed support 20, and a screw hole is formed at the fifth position of the extending part 12, such that the third fixing member 43 penetrates through the through hole 120 on the heated bed support 20 and is connected to the screw hole at the fifth position. In the embodiment, only the case is schematically illustrated where the third fixing member 43 penetrates through the through hole 120 at the fifth position and is connected to the screw hole on the heated bed support 20.

Moreover, the axial direction of the third fixing member 43 is the third direction; that is, the axial direction of the third fixing member 43 is perpendicular to both the first direction of the first fixing member 41 and the second direction of the second fixing member 42. For example, the first direction may be the Z direction, the second direction may be the X direction, and the third direction may be the Y direction, where the sliding direction of the heated bed 10 relative to the 3D printer 2 is the Y direction. In the embodiment, the aperture of the through hole 120 may be greater than the diameter of the third fixing member 43. In this way, even if the first fixing member 41, the second fixing member 42, and the third fixing member 43 are present at the same time, the heated bed 10 can still rotate around the first fixing member 41. In this case, the third fixing member 43 rotates around the first fixing member 41 within the through hole 120 with a relatively large aperture, thereby achieving leveling.

In addition, when the third fixing member 43 fixedly connects the extending part 12 to the heated bed support 20, a frictional force is present between the extending part 12 and the heated bed support 20 and/or between the extending part 12 and the third fixing member 43, or a frictional force is present between the extending part 12 and the heated bed support 20 and/or between the heated bed support 20 and the third fixing member 43. In the embodiment, the relative movement of the third fixing member 43 within the range of the through hole 120 can be limited by the above frictional force, so as to limit the relative movement between the fifth position of the extending part 12 and the heated bed support 20 in the first direction or the second direction, thereby further improving the movement rigidity of the 3D build platform 1 and the connection stability. Moreover, leveling can be achieved only when the acting force generated during leveling and exerted on the heated bed 10 or the heated bed support 20 in the first direction is greater than the frictional force. In other possible embodiments, the leveling of the heated bed 10 at the position of the third fixing member 43 may be performed first, and after the leveling is completed, the third fixing member 43 is used to fix the heated bed 10 to the heated bed support 20 in the first direction, the second direction, and the third direction. Alternatively, the third fixing member 43 may be screwed in with a small locking force before leveling, then the leveling process is performed, and after the leveling is completed, the third fixing member 43 is completely locked. In this way, the second fixing member 42 can be used to increase the rigidity and achieve leveling.

The third fixing member 43 and the second fixing member 42, when viewed separately, have similar functions, but the cooperation between the two members improves the rigidity of the build platform 1 to a certain extent. The reason is that with the cooperation between the third fixing member 43 and the second fixing member 42, the heated bed 10 and the heated bed support 20 can be rigidly fixed in the second direction and the third direction, and fixed by a frictional force only in the first direction. In the embodiment, the through hole 120 is an elongated hole disposed in the first direction, and specifically, the width of the elongated hole may be consistent with the diameter of the second fixing member 42 or the diameter of the third fixing member 43, thereby improving the rigidity of the build platform 1 to a certain extent. The reason is that the design of the elongated hole enables the heated bed 10 and the heated bed support 20 to be rigidly fixed in the second direction and the third direction, and fixed by a frictional force only in the first direction.

As shown in FIGs. 4 to 5, in the embodiment, the number of horizontal fixing members 40 includes two fixing members, and one of the fixing members is located on one side of the other fixing member in the second direction. Alternatively, one fixing member is located on one side of the other fixing member in the third direction. Alternatively, a connecting line between one fixing member and the other fixing member has a component in the second direction and a component in the third direction. The third direction is perpendicular to the first direction and the second direction, separately.

In the embodiment, two horizontal fixing members 40 may be provided; that is, the number of the horizontal fixing members 40 includes two fixing members. There are various embodiments for the relative position of the two fixing members. In one embodiment, one fixing member is located on one side of the other fixing member in the second direction; in another embodiment, one fixing member is located on one side of the other fixing member in the third direction; and in yet another embodiment, a connecting line between one fixing member and the other fixing member has a component in the second direction and a component in the third direction. In the embodiment, only the case is schematically illustrated where one fixing member is located on one side of the other fixing member in the third direction.

As shown in FIGs. 4 to 5, in the embodiment, the number of the horizontal fixing members 40 includes at least three fixing members, and the projections of the at least three fixing members on the build surface 100 form vertices of a polygon.

In the embodiment, the number of the horizontal fixing members 40 may also be more than two; that is, the number of the horizontal fixing members 40 includes at least three fixing members, and the projections of the at least three fixing members on the build surface 100 form the vertices of the polygon. Therefore, the at least three fixing members can be used to cooperate with the heated bed 10 and the heated bed support 20 to better limit the relative movement between the heated bed 10 and the heated bed support 20 and improve the supporting effect and connection performance of the heated bed 10 and the heated bed support 20.

Referring to FIG. 6 again, in the embodiment, the any one of the leveling assemblies 30 includes a leveling member 31 and a leveling elastic member 32, the leveling member 31 penetrates through the heated bed 10 from the build surface 100 and is connected to the heated bed support 20, or the leveling member 31 penetrates through the heated bed support 20 and is connected to the heated bed 10, and two opposite ends of the leveling elastic member 32 abut against the heated bed support 20 and the heated bed 10, respectively.

For the leveling assembly 30, each leveling assembly 30 may include the leveling member 31 and the leveling elastic member 32, where the leveling member 31 is connected to the heated bed 10 and a heated bed support. Specifically, in one embodiment, the leveling member 31 penetrates through the heated bed 10 from the build surface 100 of the heated bed 10 and is connected to the heated bed support 20. In other embodiments, the leveling member 31 may penetrate through the heated bed support 20 and be connected to the heated bed 10. In the embodiment, only the case is schematically illustrated where the leveling member 31 penetrates through the build surface 100 of the heated bed 10 and is connected to the heated bed support 20. Two opposite ends of the leveling elastic member 32 abut against the heated bed 10 and the heated bed support 20, respectively. That is, one end of the leveling elastic member 32 abuts against the surface, opposite to the build surface 100, of the heated bed 10, and the other end of the leveling elastic member 32 abuts against the surface, on one side proximal to the heated bed 10, of the heated bed support 20. Optionally, the leveling member 31 includes, but is not limited to, a leveling screw. Optionally, the leveling elastic member 32 may be a compression spring or a tension spring.

In the embodiment, by providing the leveling member 31 and the leveling elastic member 32 between the heated bed 10 and the heated bed support 20, the distance between the first position 101 of the heated bed 10 and the heated bed support 20 gradually decreases when the leveling member 31 is tightened clockwise. When the leveling member 31 is loosened counterclockwise, the leveling elastic member 32 presses upward against the heated bed 10, thereby increasing the distance between the first position 101 of the heated bed 10 and the heated bed support 20. In summary, the leveling member 31 and the leveling elastic member 32 can be used to control the distance between the first position 101 of the heated bed 10 and the heated bed support 20.

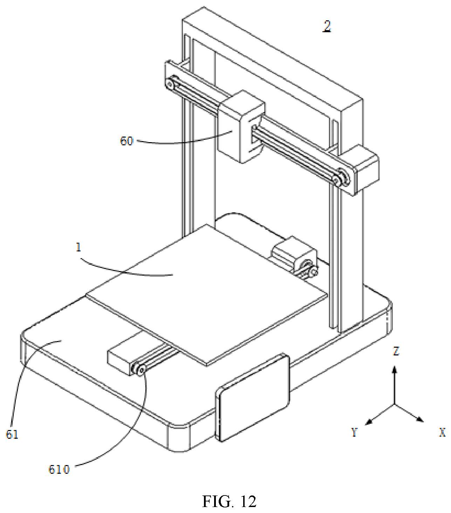

Referring to FIG. 12, FIG. 12 is a schematic diagram of a 3D printer according to an embodiment of the present application. The 3D printer 2 provided in the embodiment includes a three-dimensional printing head 60, a base 61, a driving apparatus (not shown, which may be a motor), and the 3D build platform 1 provided in the above embodiments of the present application. The three-dimensional printing head 60 is disposed above the 3D build platform 1, and the three-dimensional printing head 60 is configured to extrude materials to print a model. The heated bed support 20 is slidably connected to the base 61, and the driving apparatus is configured to drive the heated bed support 20 to generate a relative displacement in the horizontal direction between the heated bed support and the base 61. The driving apparatus is also configured to drive the three-dimensional printing head 60 to generate displacement in the vertical direction and the horizontal direction.

Illustratively, the driving apparatus may include a motor, and correspondingly, may further include a timing belt, a lead screw, a guide rod, a timing pulley, a guide rail, or the like. The specific representation form of the driving apparatus is not limited in the present application.

The three-dimensional printing head 60 includes an extrusion assembly and a hot end. The extrusion assembly conveys the printing material to the hot end, the hot end has a heating function, and the hot end heats the printing material to a molten state and extrudes the printing material in the molten state onto the build platform 1.

Illustratively, the hot end includes heat sink fins, a nozzle, and a throat pipe located between the heat sink fins and the nozzle. The printing material sequentially passes through the heat sink fins, the throat pipe, and the nozzle. Specifically, the printing material is heated to a molten state at the nozzle, and the nozzle extrudes the printing material in the molten state onto the build platform 1. During the movement of the three-dimensional printing head 60 and/or the build platform 1, the nozzle extrudes the printing material in the molten state to different positions of the build platform 1 layer by layer, thereby printing a printed object.

The extrusion assembly includes a drive wheel and a driven wheel disposed opposite to the drive wheel, and the printing material passes between the drive wheel and the driven wheel. The drive wheel rotates in a first direction to drive the printing material to be conveyed to the hot end; the drive wheel rotates in a second direction opposite to the first direction to drive the printing material to exit the extrusion assembly.

According to the 3D printer 2 provided in the embodiment, by using the 3D build platform 1 provided in the above embodiments of the present application, the rigidity of the 3D printer 2 can be improved, the accuracy of leveling can be improved, and the leveling efficiency can be improved.

In the descriptions of the present application, it should be understood that, the terms "center", "longitudinal", "transverse", "length", "width", "thickness", "up", "down", "front", "rear", "left", "right", "vertical", "horizontal", "top", "bottom", "inner", "outer", "clockwise", "counterclockwise", and the like indicate orientations or positional relationships based on those shown in the accompanying drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In addition, the terms "first" and "second" are only for the purpose of description, and may not be construed as indicating or implying the relative importance or implicitly indicating the number or order of technical features denoted. Thus, features defined by "first" and "second" may explicitly or implicitly include one or more of the features. In the description of the present application, "plurality/multiple" refers to two or more, unless otherwise explicitly and specifically defined. In addition, the terms "comprise", "include", "have", "provided with", and any variants thereof are intended to cover a non-exclusive inclusion. As used in the present application, the term "and/or" includes any of and all combinations of one or more of the associated listed items, and the phrase "at least one of A and B" means only A, only B, or both A and B.

The contents provided in the embodiments of the present application are described in detail above, and the principles and embodiments of the present application are illustrated and described. These descriptions are only used for helping to understand the method and the core idea of the present application. However, the content of the present specification should not be construed as a limitation to the present application, and those skilled in the art can make various modifications and variations to the present application without departing from the spirit and scope of the present application. These modifications and variations of the present application fall within the scope of the claims of the present application and their equivalent technologies.

## Claims

1. A 3D build platform, comprising:
a heated bed, configured to heat and carry a build plate or a printed object;
a heated bed support, disposed on one side, facing away from a build surface, of the heated bed,
wherein the build surface is one surface, carrying the build plate or the printed object, of the heated bed, and the heated bed is spaced apart from the heated bed support in a first direction, the first direction being perpendicular to the build surface;
at least two sets of leveling assemblies, the heated bed support being configured to support the heated bed in the first direction through the at least two sets of leveling assemblies, wherein any one of the leveling assemblies is connected to a first position of the heated bed and the heated bed support, separately, and is configured to adjust a distance between the first position and the heated bed support in the first direction; and
a horizontal fixing member, configured to fixedly connect the heated bed and the heated bed support in a second direction, and configured to limit relative movement between the heated bed and the heated bed support in the second direction, the second direction being perpendicular to the first direction.

2. The 3D build platform according to claim 1, wherein the heated bed comprises a body provided with the build surface and an extending part located on one side, facing away from the build surface, of the body; the horizontal fixing member comprises a first fixing member, and the first fixing member is configured to fixedly connect a second position on the extending part and the heated bed support to limit relative movement between the second position and the heated bed support; projections of the at least two sets of leveling assemblies and the second position on the build surface form vertices of a polygon.

3. The 3D build platform according to claim 2, wherein one first fixing member is provided; the at least two sets of leveling assemblies consist of two sets of leveling assemblies, and projections of the two sets of leveling assemblies and the second position on the build surface form vertices of a triangle; or the at least two sets of leveling assemblies consist of three sets of leveling assemblies, and projections of the three sets of leveling assemblies and the second position on the build surface form vertices of a quadrilateral.

4. The 3D build platform according to any one of claims 1 to 3, wherein the 3D build platform further comprises: a vertical fixing member, the vertical fixing member being configured to fixedly connect a third position of the heated bed and the heated bed support to limit relative movement between the third position and the heated bed support, and projections of the at least two sets of leveling assemblies and the third position on the build surface form vertices of a polygon.

5. The 3D build platform according to any one of claims 1 to 4, wherein the at least two sets of leveling assemblies are at least three sets of leveling assemblies, and projections of the at least three sets of leveling assemblies on the build surface form vertices of a polygon.

6. The 3D build platform according to any one of claims 1 to 5, wherein the heated bed comprises a body provided with the build surface and an extending part located on one side, facing away from the build surface, of the body, the horizontal fixing member comprises a second fixing member, and the second fixing member is a fixing screw;
the second fixing member penetrates through a through hole at a fourth position on the extending part and is connected to a screw hole on the heated bed support, an aperture of the through hole is greater than a diameter of the second fixing member, and a frictional force is present between the extending part and the heated bed support and/or between the extending part and the second fixing member; or, the second fixing member penetrates through a through hole on the heated bed support and is connected to a screw hole at the fourth position, an aperture of the through hole is greater than a diameter of the second fixing member, and a frictional force is present between the extending part and the heated bed support and/or between the heated bed support and the second fixing member; and an axial direction of the second fixing member is the second direction, and relative movement of the second fixing member within a range of the through hole is limited by the frictional force, so as to limit relative movement between the fourth position and the heated bed support in the first direction or the third direction, wherein the third direction is perpendicular to the first direction and the second direction, separately.

7. The 3D build platform according to claim 6, wherein the horizontal fixing member further comprises a third fixing member, and the third fixing member is a fixing screw;
the third fixing member penetrates through a through hole at a fifth position on the extending part and is connected to a screw hole on the heated bed support, an aperture of the through hole is greater than a diameter of the third fixing member, and a frictional force is present between the extending part and the heated bed support and/or between the extending part and the third fixing member; or the third fixing member penetrates through a through hole on the heated bed support and is connected to a screw hole at the fifth position, an aperture of the through hole is greater than a diameter of the third fixing member, and a frictional force is present between the extending part and the heated bed support and/or between the heated bed support and the third fixing member; and
an axial direction of the third fixing member is the third direction, and relative movement of the third fixing member within a range of the through hole is limited by the frictional force, so as to limit relative movement between the fifth position and the heated bed support in the first direction or the second direction.

8. The 3D build platform according to any one of claims 6 to 7, wherein the through hole is an elongated hole disposed in the first direction.

9. The 3D build platform according to any one of claims 1 to 8, wherein a number of horizontal fixing members comprises two fixing members, one of the fixing members is located on one side of the other fixing member in the second direction; or one fixing member is located on one side of the other fixing member in a third direction; or a connecting line between one fixing member and the other fixing member has a component in the second direction and a component in the third direction, wherein the third direction is perpendicular to the first direction and the second direction, separately.

10. The 3D build platform according to any one of claims 1 to 9, wherein the number of the horizontal fixing members comprises at least three fixing members, and projections of the at least three fixing members on the build surface form vertices of a polygon.

11. The 3D build platform according to any one of claims 1 to 10, wherein the any one of the leveling assemblies comprises a leveling member and a leveling elastic member, the leveling member penetrates through the heated bed from the build surface and is connected to the heated bed support, or the leveling member penetrates through the heated bed support and is connected to the heated bed, and two opposite ends of the leveling elastic member abut against the heated bed support and the heated bed, respectively.

12. The 3D build platform according to any one of claims 1 to 11, wherein the heated bed support is connected to a pulley, and a sliding direction corresponding to the pulley is a second direction or a third direction, wherein the third direction is perpendicular to the first direction and the second direction, separately.

13. A 3D printer, comprising: a three-dimensional printing head, a base, a driving apparatus, and the 3D build platform according to any one of claims 1 to 12, wherein the three-dimensional printing head is disposed above the 3D build platform, and the three-dimensional printing head is configured to extrude materials to print a model; the heated bed support is slidably connected to the base, and the driving apparatus is configured to drive the heated bed support to generate a relative displacement between the heated bed support and the base.
